(19) Europäisches Patentamt
European Patent Office
Office européen des brevets

(11) Numéro de publication: **0 116 483**
**B1**

(12) # FASCICULE DE BREVET EUROPEEN

(45) Date de publication du fascicule du brevet: **07.10.87**

(21) Numéro de dépôt: **84400014.1**

(22) Date de dépôt: **05.01.84**

(51) Int. Cl.⁴: **C 22 B 3/00**, C 22 B 59/00, C 22 B 60/02, C 01 F 15/00, C 01 F 17/00, C 01 G 43/00

(54) **Procédé de récupération globale de l'uranium, de l'yttrium, du thorium et des terres rares contenus dans une phase organique.**

(30) Priorité: **17.01.83 FR 8300601**

(43) Date de publication de la demande:
**22.08.84 Bulletin 84/34**

(45) Mention de la délivrance du brevet:
**07.10.87 Bulletin 87/41**

(84) Etats contractants désignés:
**BE DE FR GB IT NL**

(56) Documents cités:
**EP-A-0 015 589**
**EP-A-0 015 811**
**EP-A-0 026 132**
**FR-A-2 396 803**
**US-A-2 859 092**
**US-A-2 866 680**
**US-A-2 882 123**
**US-A-4 180 545**
**US-A-4 243 637**
**US-A-4 316 877**

(73) Titulaire: **Rhône-Poulenc Chimie**
**25, quai Paul Doumer**
**F-92408 Courbevoie Cédex (FR)**

(72) Inventeur: **Rollat, Alain**
**20, rue Duhesme**
**F-75018 Paris (FR)**
Inventeur: **Sabot, Jean-Louis**
**1 Quater avenue Lesage**
**F-78600 Maisons Laffite (FR)**

(74) Mandataire: **Dubruc, Philippe et al**
**RHONE-POULENC INTERSERVICES Service Brevets Chimie 25, quai Paul-Doumer**
**F-92408 Courbevoie Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**EP 0 116 483 B1**

**Description**

La présente invention concerne un procédé de récupération globale de l'uranium, et au moins un élément du groupe comprenant le thorium, de l'yttrium et les terres rares contenus dans une phase organique. Ce procédé peut notamment s'utiliser pour la récupération des espèces précitées contenues dans un acide phosphorique brut de voie humide.

On connaît déjà un procédé de récupération globale de ces espèces à partir d'un solvant organique, notamment par la demande de brevet européen N° 0026132. Cette demande de brevet décrit un procédé dans lequel une solution aqueuse acide, par exemple un acide phosphorique brut de voie humide, est mise en contact avec une phase organique comprenant notamment un acide di(alkylphenyl) phosphorique. Après séparation des phases, la phase organique est réextraite au moyen d'une solution contenant de l'acide fluorhydrique et de l'acide phosphorique.

Cette réextraction est efficace mais elle présente un certain nombre d'inconvénients.

Tout d'abord les coûts en réactifs peuvent être élevés. En effet l'acide fluorhydrique et l'acide phosphorique passent en partie dans la phase organique lors de la réextraction. Ceci entraîne un abaissement de la concentration en ces acides dans la boucle de circulation de la phase aqueuse de réextraction. Il est donc nécessaire de prévoir une recharge importante des acides.

On a tenté de résoudre ce problème de consommation des réactifs en prévoyant après l'étape de réextraction un lavage par une solution aqueuse de la phase organique épuisée en espèces métalliques avant sa réintroduction dans la zone d'extraction de la solution aqueuse acide initiale. La phase organique est alors épuisée en acides phosphorique et fluorhydrique et la solution aqueuse sortant de la zone de lavage est ensuite réunie à la solution aqueuse de réextraction. Néanmoins, dans un tel cas les concentrations en acides de la solution venant de la zone de lavage sont en général inférieures à celle de la boucle de réextraction de sorte que la réunion des deux solutions donne un courant appauvri en acides. Il est alors nécessaire de prévoir une concentration de ce courant et ceci entraîne une consommation d'énergie qui peut être aussi nuisible à l'économie du procédé.

Par ailleurs ce procédé fait appel à une technologie particulière permettant les séparations triphasiques. Les machines qui effectuent cette séparation sont chères, d'un entretien délicat et nécessitent d'être construites avec des matériaux présentant une très grande résistance à la corrosion par les acides fluorhydrique et phosphorique.

Le besoin s'est donc fait sentir de mettre au point un procédé de réextraction des espèces recherchées qui soit simple et économique dans sa mise en oeuvre industrielle.

Ce but est atteint par le procédé de l'invention, procédé de récupération globale de l'uranium et au moins un élément du groupe comprenant l'yttrium, le thorium et les terres rares contenus dans une phase organique, qui est caractérisé en ce que l'on met ladite phase organique en contact avec au moins un diluant choisi parmi le groupe comprenant les éthers, les alcools, les polyols, les amides, les sulfoxydes et les cétones, au moins un agent précipitant choisi parmi le groupe comprenant l'ammoniaque, les sels d'ammonium et les fluorures, à l'exception du fluorure d'hydrogène, et une phase aqueuse, le diluant étant choisi de telle sorte que l'on obtienne un milieu homogène avec la phase organique et la phase aqueuse, ce par quoi on obtient une phase liquide et un précipité comprenant les espèces précitées que l'on sépare ensuite de la phase liquide.

Grâce à l'utilisation du diluant miscible, on obtient généralement un système à deux phases où la décantation se fait facilement dans un appareillage simple.

D'autres caractéristiques et avantages de l'invention seront mieux compris à la lecture de la description qui va suivre et des exemples concrets mais non limitatifs de mise en oeuvre du procédé de l'invention.

Le procédé de l'invention s'applique à toute phase organique comprenant de l'uranium, et au moins un élément du groupe comprenant l'yttrium, le thorium et les terres rares. Cette phase organique peut avoir été chargée en ces espèces par mise en contact avec une phase aqueuse acide contenant ces espèces.

Cette phase aqueuse peut avoir différentes origines. Elle peut contenir un acide minéral fort tel que l'acide phosphorique, sulfurique, chlorhydrique et les espèces recherchées à l'état de traces.

Dans le cadre de la présente invention, on peut utiliser toute phase aqueuse acide du type des phases aqueuses acides de départ décrites dans la demande de brevet européen 0026132. Ainsi, cette phase aqueuse peut être constituée par un acide phosphorique brut de voie humide. Ce peut être aussi la phase aqueuse obtenue par traitement par un acide minéral fort en solution aqueuse d'un phosphogypse résiduaire contenant les espèces précitées à l'état insoluble. Ce peut être par ailleurs le raffinat aqueux de l'extraction aux solvants d'un acide phosphorique de voie humide.

En ce qui concerne la phase organique, le procédé de l'invention peut s'appliquer notamment particulièrement bien à toute phase organique comprenant un extractant susceptible d'extraire des phases aqueuses acides précités l'uranium et au moins un élément du groupe yttrium, thorium, terres rares.

On peut citer comme extractant utilisables dans le cadre de l'invention les esters alkylés, arylés, ou alkylarylés (mono ou dialkylarylés) des acides phosphoriques, phosphiniques et phosphoniques, ou les mélanges de ces esters. C'est ainsi que l'on pourra utiliser un phase organique à base d'acide di(ethyl-2-hexyl)phosphorique, d'acide mono(ethyl-2-hexyl)phosphorique, d'acide mono(octylphényl)phosphorique, d'acide di(octylphényl)phosphorique.

En outre, on peut aussi utiliser les extractants comportant au moins deux atomes de phosphore, notamment les extractants du type acide dialkylpyrophosphoriques, dialkyldiphosphoniques, dialkyldiphosphiniques ou leur mélange. On peut citer, par exemple, l'acide octylpyrophosphorique OPPA, notamment celui obtenu par action du pentoxyde de phosphore sur l'octanol, ou aussi l'acide didodécyl vinylène diphosphonique

$$(C_{12}H_{25}O)OHOP(CH{-}\underset{\underset{CH_2}{\|}}{CH}){-}POH(C_{12}H_{25}O).$$

On peut bien entendu utiliser des mélanges des différentes catégories d'extractants décrits ci-dessus.

Bien entendu ces extractants peuvent être utilisés en combinaison avec un solvant organique inerte choisi parmi des hydrocarbures aromatiques ou aliphatiques, utilisés seuls ou en mélange. Comme solvant inerte on peut citer, par exemple, l'heptane, le dodécane, l'hexane et les coupes pétrolières du type kérosène, des composés aromatiques tels que, par exemple, le benzène, le toluène, l'éthylbenzène, le xylène et les coupes du type Solvesso (marque déposée de la Société EXXON) utilisés seuls ou en mélange.

De plus, la phase organique peut comprendre un agent solvatant (modifieur) choisi parmi des oxydes de trialkylphosphine, des phosphinates d'alkyle, des phosphonates d'alkyle, des phosphates d'alkyle et des alkylsulfoxydes. On préfère utiliser dans la pratique l'oxyde de trioctylphosphine (TOPO), le dibutylbutylphosphonate ou le phosphate de tributyle.

Enfin, dans certains cas, il peut être avantageux d'incorporer à la phase organique un agent de modification choisi parmi des composés hydroxylés aliphatiques contenant plus de 4 atomes de carbone ou alkylaryliques contenant plus de 10 atomes de carbone. De préférence, on utilise pour ce faire un alcool aliphatique, de préférence à 10 atomes de carbone ou un alkylphénol tel que le nonylphénol.

Selon un mode de réalisation particulier de l'invention on utilise une phase organique comprenant un extractant global des espèces précitées à partir des phases aqueuses acides du type décrit plus haut qui est un acide di(alkylphényl)phosphorique substantiellement exempt du dérivé mono(alkylphényl)-phosphorique et un solvant organique inerte du type décrit plus haut.

On utilisera plus particulièrement un acide dans lequel le radical alkyle est un radical aliphatique à chaîne droite ou ramifiée contenant de quatre à douze atomes de carbone. De préférence, le radical alkyle est le radical octyle, plus particulièrement le radical 1,1,3,3 tétraméthylbutyle, de préférence en position 4. Bien entendu, au lieu d'un seul acide di(alkylphényl)phosphorique on peut utiliser un de leurs mélanges.

Toujours dans le cas de ce même mode de réalisation particulier, la phase organique peut comprendre en outre un agent solvatant et/ou un agent de modification du même type que ceux décrits plus haut.

Les conditions d'emploi de ces composants de la phase organique sont décrites dans la demande de brevet européen 0026132.

La mise en contact de la phase aqueuse acide de départ avec la phase organique d'extraction se fait d'une manière connue en soi qui n'entre pas dans le cadre de l'invention.

La phase organique chargée en uranium, thorium, yttrium et terres rares est alors mise en contact avec un diluant miscible au moins partiellement à cette phase.

On utilise de préférence un diluant facilement distillable ceci pour faciliter la séparation du mélange diluant phase organique après la séparation du précipité. En particulier les diluants à bas point d'ébullition conviennent bien au procédé de l'invention.

Selon un mode particulier de réalisation de l'invention, ce diluant est un éther.

Selon un autre mode de réalisation, le diluant est un alcool ou un polyol. On choisit notamment les alcools aliphatiques à chaîne courte, de préférence avec un nombre d'atomes de carbone inférieur ou égal à 6, notamment inférieur ou égal à 4.

Selon encore un autre mode de réalisation, on peut utiliser comme diluant un amide, de préférence un amide avec un nombre d'atomes de carbone inférieur ou égal à 6, plus particulièrement inférieur ou égal à 4.

On peut utiliser par exemple le diméthylformamide.

Selon une autre variante de l'invention, le diluant est un sulfoxyde tel que par exemple le diméthylsulfoxyde.

Selon un mode de réalisation préféré de l'invention, on utilise comme diluant une cétone. Les cétones se révèlent particulièrement efficaces et permettent des précipitations quantitatives des espèces recherchées. On utilise de préférence une cétone aliphatique à chaîne courte en particulier avec un nombre d'atomes de carbone inférieur ou égal à 6. On peut employer, par exemple, l'acétone, la méthyléthylcétone, la diéthylcétone.

Il est bien sûr tout-à-fait possible d'utiliser un mélange des différents types de diluants décrits ci-dessus.

La quantité de diluant à utiliser peut varier dans des limites larges. Dans tous les cas, on utilisera une quantité de diluant permettant d'obtenir un milieu homogène avec la phase organique et avec la phase aqueuse de l'agent précipitant si celui-ci est utilisé sous forme d'une solution.

En ce qui concerne l'agent précipitant on peut utiliser l'ammoniaque ou les sels d'ammonium tels que le carbonate ou le bicarbonate d'ammonium.

De préférence, on utilise un fluorure. Comme fluorure, on peut citer par exemple le fluorure d'ammonium ou les fluorures des métaux alcalins. On peut aussi utiliser les fluorures des métaux alcalino-terreux, et les silico-fluorures. On peut aussi citer l'acide fluosilicique.

Bien entendu, il est tout-à-fait possible d'utiliser un mélange de précipitants.

La quantité d'agent précipitant peut varier dans de larges limites qui peuvent être fonction de la nature du diluant.

L'agent précipitant peut être introduit sous diverses formes notamment sous forme solide ou sous forme d'une solution plus ou moins concentrée. Dans le cas du fluorure d'ammonium par exemple et notamment en combinaison avec l'acétone comme diluant on peut utiliser des solutions concentrées à 300—400 g/l.

Généralement, on met tout d'abord en contact la phase organique avec le diluant. On ajoute ensuite au milieu obtenu l'agent précipitant. Néanmoins, il est tout-à-fait possible de mettre en contact la phase organique simultanément avec le diluant et l'agent précipitant ou même tout d'abord avec l'agent précipitant et ensuite le diluant.

On a pu noter par ailleurs qu'il pouvait être avantageux lors de ou après la mise en contact de la phase organique avec le diluant et l'agent précipitant d'ajouter de l'eau à la phase liquide. Cette addition d'eau a généralement pour effet d'augmenter sensiblement la quantité d'espèces recherchées précipitées. Cet effet est particulièrement sensible dans le cas de l'emploi comme diluant de cétones et notamment de l'acétone.

Cette addition d'eau peut se faire à tout moment lors de la mise en contact de la phase organique avec le diluant et l'agent précipitant ou bien même avant cette mise en contact ou après celle-ci.

Cette eau peut être constituée par l'eau ou peut venir s'ajouter à l'eau qui aurait pu déjà ou qui pourrait ensuite être amenée dans le milieu lors de l'utilisation d'un agent précipitant sous forme d'une solution.

La quantité d'eau ajoutée peut varier. Comme d'une manière générale on cherche à travailler dans un milieu homogène, la quantité maximale d'eau à ajouter dans ce cas est celle au-delà de laquelle l'homogénéité du milieu n'est plus assurée.

On notera par ailleurs que si l'uranium ne se trouve pas dans la phase organique au degré d'oxydation IV mais au degré VI et si l'on veut précipiter quantitativement celui-ci, il convient de préférence de la réduire préalablement. Cette réduction peut avoir lieu soit dans la phase organique soit dans le milieu phase organique-diluant. On peut utiliser tout réducteur convenable par exemple du fer métal, de l'aluminium, du zinc.

La température pour la mise en contact est généralement comprise entre la température ambiante, 20°C environ, et 40°C environ.

Le procédé de l'invention peut se dérouler en continu ou en discontinu. La mise en contact se fait dans des appareils connus.

La mise en contact de la phase organique, du diluant et de l'agent de précipitation donne donc lieu à l'apparition d'un précipité comprenant l'uranium, l'yttrium, le thorium et les terres rares. Ce précipité peut être facilement séparé par décantation ou filtration de la phase liquide et il constitue la production.

Les constituants de la phase liquide peuvent être séparés par lavage et distillation. On peut ainsi recycler le diluant et l'agent de précipitation.

Des exemples vont maintenant être donnés à titre illustratif.

Exemple 1

On part d'un acide phosphorique de voie humide provenant d'un minerai de Floride dont les concentrations en uranium et en terres rares sont les suivantes: U 150 mg/l, $Y_2O_3$ 75 mg/l, oxydes de terres rares 120 mg/l. On l'extrait avec le solvant suivant: DOPPA (acide di(octylphényl)phosphorique) 0,5 M, TOPO 0,125 M, Solvesso 300 g/l, kérosène dans un rapport de phase A/O=5. On obtient un extrait contenant: U 540 mg/l, $Y_2O_3$ 350 mg/l et oxydes de terres rares 300 mg/l.

On ajoute à 1 litre d'extrait, 1 litre d'acétone anhydre et 2 g de fer métal destiné à réduire U (VI) en U (IV) puis 5 minutes plus tard 90 $cm^3$ d'une solution de fluorure d'ammonium à la concentration de 185 g/l. On observe la formation d'un précipité facile à séparer par décantation et filtration.

Le dosage de l'uranium, de l'yttrium et des terres rares dans la solution surnageante indique que le rendement de précipitation est supérieur à 98% pour l'uranium, à 97% pour l'yttrium, à 95% pour les terres rares.

La phase liquide séparée est ensuite soumise à une distillation à pression atmosphérique qui conduit en tête au mélange azéotropique eau- acétone recyclable et en pied à un mélange biphasique constitué d'une part d'une solution de fluorure d'ammonium recyclable et d'autre part un solvant ayant la composition du solvant d'extraction et donc recyclable.

Exemple 2

On part d'un acide phosphorique de voie humide provenant d'un minerai du Maroc, et qui a été dopé en europium et thorium. Les concentrations dans cet acide sont les suivantes: U: 150 mg/l, $Y_2O_3$: 68 mg/l, $Eu_2O_3$: 50 mg/l, $ThO_2$: 50 mg/l. On extrait l'acide avec le même solvant et dans les mêmes conditions que dans l'exemple 1.

On ajoute à un litre d'extrait 1 litre d'acétone anhydre et 2 g de fer en poudre puis 85 $cm^3$ d'une solution de fluorure d'ammonium identique à celle de l'exemple 1. On recueille un précipité dont l'analyse montre que les rendements de précipitation sont les suivants: $Eu_2O_3$: 90%, $ThO_2$ supérieur à 95%, $Y_2O_3$ supérieur à 97%.

Exemple 3

On part d'un acide phosphorique de voie humide obtenu à partir d'un minerai de Maroc présentant les concentrations suivantes: U: 148 mg/l, $Y_2O_3$: 68 mg/l. On a ajouté de la poudre de fer à l'acide à raison de 4 g par litre.

On extrait l'acide avec un solvant comprenant de l'OPPA 4 g/l en mélange avec du kérosène, dans un rapport de phase A/O=5. On ajoute à 1 litre d'extrait, 2,75 litres d'acétone anhydre puis 80 ml d'une solution de fluorure d'ammonium du même type que précédemment. On obtient un précipité. Les rendements de précipitation sont les suivants: U supérieur à 98%, $Y_2O_3$ supérieur à 90%.

Exemple 4

Cet exemple montre les résultats obtenus en utilisant différents types de diluants sur une phase organique d'extraction de composition suivante: DOPPA: 0,5 M, TOPO: 0,125 M, Solvesso: 300 g/l, kérosène, cette phase étant chargée à 2 g/l en $Y_2O_3$.

Les résultats sont rassemblés dans le tableau ci-dessous.

| Diluant | Volume (ml) | Phase organique (ml) | $NH_4F$ 10 M (ml) 370 g/l | Rendement de precipitation de $Y_2O_3$ |
|---|---|---|---|---|
| Alcool éthylique | 20 | 10 | 0,5 | >96% |
| Alcool n-propylique | 25 | 10 | 0,5 | >96% |
| Alcool isopropylique | 25 | 10 | 0,5 | >96% |
| Méthyléthylcétone | 25 | 10 | 0,5 | >96% |
| Diéthyléther | 20 | 10 | 0,3 | 90% |

Exemple 5

Cet exemple montre les résultats obtenus en utilisant différents diluants le diméthylformamide (DMF) d'une part, le diméthylsulfoxyde (DMSO) en présence d'acétone d'autre part sur une phase organique d'extraction de composition suivante: DOPPA: 0,5 M, TOPO: 0,125 M, Solvesso (complément), cette phase étant chargée à 2 g/l en $Y_2O_3$.

Les résultats sont rassemblés dans le tableau ci-dessous:

| Diluant | Volume (ml) | Temperature | Phase organique (ml) | $NH_4F$ 10 M (ml) | Rendement de precipitation de $Y_2O_3$ |
|---|---|---|---|---|---|
| DMF | 10 | 40°C | 10 | 0,5 | >98% |
| DMSO + Acétone | 5<br>5 | 25°C | 10 | 0,5 | 94% |

**Revendications**

1. Procédé de récupération globale de l'uranium et au moins un élément du groupe comprenant l'yttrium, le thorium et les terres rares contenus dans une phase organique, qui est caractérisé en ce que l'on met ladite phase organique en contact avec au moins un diluant choisi parmi le groupe comprenant les éthers, les alcools, les polyols, les amides, les sulfoxydes et les cétones, au moins un agent précipitant choisi parmi le groupe comprenant l'ammoniaque, les sels d'ammonium et les fluorures, à l'exception du fluorure d'hydrogène, et une phase aqueuse, le diluant étant choisi de telles sorte que l'on obtienne un milieu homogène avec la phase organique et la phase aqueuse, ce par quoi on obtient une phase liquide et un précipité comprenant les espèces précitées que l'on sépare ensuite de la phase liquide.

2. Procédé selon la revendication 1, caractérisé en ce que le diluant est une cétone aliphatique avec un nombre d'atomes de carbone inférieur ou égal à 6.

3. Procédé selon la revendication 2, caractérisé en ce que la cétone est choisie dans le groupe comprenant l'acétone, la méthyléthylcétone, la diéthylcétone.

4. Procédé selon la revendication 1, caractérisé en ce que le diluant est un éther notamment le diethylether.

5. Procédé selon la revendication 1, caractérisé en ce que le diluant est un alcool ou un polyol aliphatique avec un nombre d'atomes de carbone inférieur ou égal à 6, plus particulièrement inférieur ou égal à 4.

6. Procédé selon la revendication 1, caractérisé en ce que le diluant est un amide avec un nombre d'atomes de carbone inférieur ou égal à 6, plus particulièrement inférieur ou égal à 4.

7. Procédé selon la revendication 6, caractérisé en ce que l'amide est le diméthylformamide.

8. Procédé selon la revendication 1, caractérisé en ce que le diluant est un sulfoxyde notamment le diméthylsulfoxyde.

9. Procédé selon la revendication 1, caractérisé en ce que le fluorure est choisi dans le groupe comprenant le fluorure d'ammonium, les fluorures des métaux alcalins.

10. Procédé selon l'une quelconque des revendications précédentes, caractérisé en ce que l'on réalise la mise en contact de la phase organique avec le diluant tout d'abord et on ajoute ensuite l'agent précipitant.

11. Procédé selon l'une quelconque des revendications précédentes, caractérisé en ce que lors ou après la mise en contact de la phase organique avec le diluant et l'agent précipitant, on ajoute de l'eau à la phase liquide.

12. Procédé selon l'une quelconque des revendications précédentes, caractérisé en ce que lorsque l'uranium se trouve présent dans la phase organique au degré d'oxydation VI, on le réduit par addition d'un réducteur à la phase organique ou au mélange phase organique-diluant.

13. Procédé selon l'une quelconque des revendications précédentes, caractérisé en ce que la phase organique a été chargée en espèces précitées par mise en contact avec une phase aqueuse acide contenant lesdites espèces.

14. Procédé selon la revendication 13, caractérisé en ce que la phase aqueuse acide précitée est soit un acide phosphorique brut de voie humide, soit la phase obtenue par traitement au moyen d'un acide minéral fort en solution aqueuse d'un phosphogypse résiduaire contenant lesdites espèces à l'état insoluble, soit enfin le raffinat aqueux de l'extraction aux solvants insolubles ou peu solubles à l'eau d'un acide phosphorique brut de voie humide.

15. Procédé selon l'une quelconque des revendications précédentes caractérisé en ce que la phase organique précitée comprend au moins un élément choisi dans le groupe des esters alkylés, arylés, alkylarylés des acides phosphoriques, phosphiniques et phosphoniques.

16. Procédé selon l'une quelconque des revendications 1 à 14, caractérisé en ce que la phase organique précitée comprend au moins un élément choisi dans le groupe des acides dialkylpyrophosphoriques, dialkyldiphosphoniques, dialkyldiphosphiniques.

17. Procédé selon la revendication 16, caractérisé en ce que la phase organique comprend l'acide octylpyrophosphorique.

18. Procédé selon l'une quelconque des revendications 15 à 17, caractérisé en ce que la phase organique comprend en outre un solvant inerte choisi parmi des hydrocarbures aliphatiques comprenant l'heptane, l'hexane, le dodécane et des coupes pétrolières du type kérosène; des hydrocarbures aromatiques comprenant le benzène, l'éthylbenzène, le toluène, le xylène et des coupes pétrolières aromatiques.

19. Procédé selon l'une quelconque des revendications 15 à 18 caractérisé en ce que la phase organique contient en outre un dérivé solvatant choisi parmi des oxydes de trialkylphosphine, des phosphinates d'alkyle, des phosphonates d'alkyle, des phosphates d'alkyle, et des alkylsulfoxydes.

20. Procédé selon l'une quelconque des revendications 15 à 19 caractérisé en ce que la phase organique contient un agent de modification choisi parmi des composés hydroxylés aliphatiques contenant plus de 4 atomes de carbone ou alkylaryliques contenant plus de 10 atomes de carbone.

21. Procédé selon la revendication 15 et l'une quelconque des revendications 18 à 20 caractérisé en ce que la phase organique précitée comprend un acide di(alkylphényl)phosphorique substantiellement exempt du dérivé mono(alkylphényl)phosphorique dans lequel le radical alkyle est un radical aliphatique à chaîne droite ou ramifiée contenant de 4 à 12 atomes de carbone.

22. Procédé selon la revendication 21 caractérisé en ce que le radical alkyle est le radical octyl, notamment le radical 1,1,3,3 tétraméthylbutyle de préférence en position 4.

**Patentansprüche**

1. Verfahren zur gemeinsamen Rückgewinnung von Uranium und mindestens einem Element der Yttrium, Thorium und die Seltenen Erden umfassenden Gruppe, die in einer organischen Phase enthalten sind, dadurch gekennzeichnet, daß man diese organische Phase mit mindestens einem aus der die Ether,

die Alkohole, die Polyole, die Amide, die Sulfoxide und die Ketone umfassenden Gruppe ausgewählten Verdünnungsmittel und mit mindestens einem Fällungsreagens, ausgewählt aus der Gruppe umfassend Ammoniak, die Ammoniumsalze und die Fluoride ausgenommen Fluorwasserstoff, und einer wässrigen Phase in Kontakt bringt, wobei das Verdünnungsmittel so ausgewählt wird, daß man ein mit der organischen und der wässrigen Phase homogenes Medium erhält, wodurch man eine flüssige Phase und einen Niederschlag erhält, der die vorgenannten Elemente enthält, die man anschließend von der flüssigen Phase abtrennt.

2. Verfahren nach Anspruch 1, dadurch gekennzeichnet, daß das Verdünnungsmittel ein aliphatisches Keton mit einer Anzahl Kohlenstoffatome kleiner oder gleich 6 ist.

3. Verfahren nach Anspruch 2, dadurch gekennzeichnet, daß das Keton aus der Aceton, Methylethylketon und Diethylketon umfassenden Gruppe ausgewählt wird.

4. Verfahren nach Anspruch 1, dadurch gekennzeichnet, daß das Verdünnungsmittel ein Ether, insbesondere Diethylether ist.

5. Verfahren nach Anspruch 1, dadurch gekennzeichnet, daß das Verdünnungsmittel ein Alkohol oder ein aliphatisches Polyol mit einer Anzahl von Kohlenstoffatomen kleiner oder gleich 6 ist, insbesondere kleiner oder gleich 4.

6. Verfahren nach Anspruch 1, dadurch gekennzeichnet, daß das Verdünnungsmittel ein Amid mit einer Anzahl von Kohlenstoffatomen kleiner oder gleich 6, insbesondere kleiner oder gleich 4 ist.

7. Verfahren nach Anspruch 6, dadurch gekennzeichnet, daß das Amid Dimethylformamid ist.

8. Verfahren nach Anspruch 1, dadurch gekennzeichnet, daß das Verdünnungsmittel ein Sulfoxid, insbesondere Dimethylsulfoxid ist.

9. Verfahren nach Anspruch 1, dadurch gekennzeichnet, daß das Fluorid aus der Ammoniumfluorid und die Fluoride der Alkalimetalle umfassenden Gruppe ausgewählt wird.

10. Verfahren nach einem der vorhergehenden Ansprüche, dadurch gekennzeichnet, daß man erst die organische Phase mit dem Verdünnungsmittel in Kontakt bringt und dann das Fällungsreagens hinzufügt.

11. Verfahren nach einem der vorhergehenden Ansprüche, dadurch gekennzeichnet, daß man nach oder während dem In-Kontakt-bringen der organischen Phase mit dem Verdünnungsmittel und dem Fällungsreagens der flüssigen Phase Wasser zugibt.

12. Verfahren nach einem der vorhergehenden Ansprüche, dadurch gekennzeichnet, daß man gegebenenfalls in der organischen Phase in der Oxydationsstufe VI anwesendes Uran durch Zugabe eines Reduktionsmittels zur organischen Phase oder zum Gemisch aus organischer Phase und Verdünnungsmittel reduziert.

13. Verfahren nach einem der vorhergehenden Ansprüche, dadurch gekennzeichnet, daß die organische Phase mit den vorgenannten Elementen beladen wurde, indem sie mit einer wässrigen, sauren diese Elemente enthaltenden Phase in Berührung gebracht wurde.

14. Verfahren nach Anspruch 13, dadurch gekennzeichnet, daß die vorgenannte saure wässrige Phase entweder eine rohe Phosphorsäure aus dem Naßverfahren oder die Phase ist, die durch Behandlung eines Abfall-Phosphorgipses mit einer starken Mineralsäure in wässriger Lösung erhalten wird, wobei der Abfall-Phosphorgips die genannten Elemente in unlöslichem Zustand enthält, oder das wässrige Raffinat der Extraktion einer rohen Naß-Phosphorsäure mit in Wasser unlöslichen oder wenig löslichen Lösungsmitteln ist.

15. Verfahren nach einem der vorhergehenden Ansprüche, dadurch gekennzeichnet, daß die vorgenannte organische Phase mindestens eine aus der Gruppe der Alkyl-, Aryl-, oder Alkylarylester der Phosphorsäuren, Phosphinsäuren und Phosphonsäuren ausgewählte Verbindung enthält.

16. Verfahren nach einem der Ansprüche 1 bis 14, dadurch gekennzeichnet, daß die vorgenannte organische Phase mindestens eine aus der Gruppe der Dialkylpyrophosphorsäuren, Dialkyldiphosphonsäuren oder Dialkyldiphosphinsäuren ausgewählte Verbindung enthält.

17. Verfahren nach Anspruch 16, dadurch gekennzeichnet, daß die organische Phase Dioctylpyrophosphorsäure enthält.

18. Verfahren nach einem der Ansprüche 15 bis 17, dadurch gekennzeichnet, daß die organische Phase zusätzlich ein aus den aliphatischen Kohlenwasserstoffen, umfassend Heptan, Hexan, Dodecan und die Petroleumverschnitte des Typs Kerosin, den aromatischen Kohlenwasserstoffen umfassend Benzol, Ethylbenzol, Toluol, Xylol und die aromatischen Petroleumverschnitte, ausgewähltes inertes Lösungsmittel enthält.

19. Verfahren nach einem der Ansprüche 15 bis 18, dadurch gekennzeichnet, daß die organische Phase zusätzlich ein solvatisierendes aus den Oxiden des Trialkylphosphins, den Alkylphosphinaten, den Alkylphosphonaten, den Alkylphosphaten und den Alkylsulfoxiden ausgewähltes Derivat enthält.

20. Verfahren nach einem der Ansprüche 15 bis 19, dadurch gekennzeichnet, daß die organische Phase ein aus den hydroxylierten aliphatischen Verbindungen mit mehr als 4 Kohlenstoffatomen oder den hydroxylierten Alkylaryl-Verbindungen mit mehr als 10 Kohlenstoffatomen ausgewähltes modifizierendes Agens enthält.

21. Verfahren nach Anspruch 15 oder einem der Ansprüche 18 bis 20, dadurch gekennzeichnet, daß die vorgenannte organische Phase eine im wesentlichen von der Mono(Alkylphenyl)phosphorverbindung freie Di(Alkylphenyl)phosphorsäure enthält, deren Alkylrest ein aliphatischer Rest mit grader oder verzweigter Kette mit 4 bis 12 Kohlenstoffatomen ist.

22. Verfahren nach Anspruch 21, dadurch gekennzeichnet, daß der Alkylrest ein Octylrest, insbesondere der 1,1,3,3-Tetramethylbutylrest, vorzugsweise in 4-Stellung ist.

**Claims**

1. A process for the total recovery of uranium and at least one element from the group comprising yttrium, thorium and rare earths contained in an organic phase, which is characterised by bringing said organic phase into contact with at least one diluent selected from the group comprising ethers, alcohols, polyhydric alcohols, amides, sulphoxides and ketones, at least one precipitating agent selected from the group comprising ammonia, ammonium salts and fluorides, except for hydrogen fluoride, and an aqueous phase, the diluent being selected such as to produce a homogeneous medium with the organic phase and the aqueous phase, thereby producing a liquid phase and a precipitate comprising said species which are then separated from the liquid phase.

2. A process according to claim 1 characterised in that the diluent is an aliphatic ketone with a number of carbon atoms that is lower than or equal to 6.

3. A process according to claim 2 characterised in that the ketone is selected from the group comprising acetone, methylethylketone and diethylketone.

4. A process according to claim 1 characterised in that the diluent is an ether, in particular diethylether.

5. A process according to claim 1 characterised in that the diluent is an aliphatic alcohol or polyhydric alcohol with a number of carbon atoms that is lower than or equal to 6 and more particularly lower than or equal to 4.

6. A process according to claim 1 characterised in that the diluent is an amide with a number of carbon atoms that is lower than or equal to 6 and more particularly lower than or equal to 4.

7. A process according to claim 6 characterised in that the amide is dimethylformamide.

8. A process according to claim 1 characterised in that the diluent is a sulphoxide, in particular dimethylsulphoxide.

9. A process according to claim 1 characterised in that the fluoride is selected from the group comprising ammonium fluoride and fluorides of alkali metals.

10. A process according to any one of the preceding claims characterised by first producing contact of the organic phase with the diluent and then adding the precipitating agent.

11. A process according to any one of the preceding claims characterised in that, in or after the operating of bringing the organic phase into contact with the diluent and the precipitating agent, water is added to the liquid phase.

12. A process according to any one of the preceding claims characterised in that when the uranium is present in the organic phase in the degree of oxidation VI, it is reduced by the addition of a reducing agent to the organic phase or to the mixture of the organic phase and the diluent.

13. A process according to any one of the preceding claims characterised in that the organic phase was charged in respect of said species by being brought into contact with an acid aqueous phase containing said species.

14. A process according to claim 13 characterised in that said acid aqueous phase is either a crude wet-process phosphoric acid or the phase produced by treatment by means of a strong inorganic acid in aqueous solution of a residual phosphogypsum containing said species in the insoluble state, or finally the aqueous raffinate of extraction with solvents which are insoluble or weakly soluble in water of a crude wet-process phosphoric acid.

15. A process according to any one of the preceding claims characterised in that said organic phase comprises at least one element selected from the group consisting of alkyl, aryl and alkylaryl esters of phosphoric, phosphinic and phosphonic acids.

16. A process according to any one of claims 1 to 14 characterised in that said organic phase comprises at least one element selected from the group consisting of dialkylpyrophosphoric, dialkyldiphosphonic and dialkyldiphosphinic acids.

17. A process according to claim 16 characterised in that the organic phase comprises octylpyrophosphoric acid.

18. A process according to any one of claims 15 to 17 characterised in that the organic phase further comprises an inert solvent selected from aliphatic hydrocarbons comprising heptane, hexane, dodecane and petroleum cuts of the kerosene type; and aromatic hydrocarbons comprising benzene, ethylbenzene, toluene, xylene and aromatic petroleum cuts.

19. A process according to any one of claims 15 to 18 characterised in that the organic phase further contains a solvating derivative selected from trialkylphosphine oxides, alkylphosphinates, alkylphosphonates, alkylphosphates and alkylsulphoxides.

20. A process according to any one of claims 15 to 19 characterised in that the organic phase contains a modifying agent selected from aliphatic hydroxyl compounds containing more than 4 carbon atoms or alkylaryl compounds containing more than 10 carbon atoms.

21. A process according to claim 15 and any one of claims 18 to 20 characterised in that said organic phase comprises a di(alkylphenyl)phosphoric acid substantially free from the mono(alkylphenyl)phosphoric derivative in which the alkyl radical is a branched or straight chain aliphatic radical containing from 4 to 12 carbon atoms.

22. A process according to claim 21 characterised in that the alkyl radical is the octyl radical, in particular the 1,1,3,3-tetramethylbutyl radical, preferably in position 4.